# EUROPÄISCHE PATENTSCHRIFT

(11) **EP 0 509 211 B1**
(45) Veröffentlichungstag und Bekanntmachung des Hinweises auf die Patenterteilung: **28.04.1999**
(21) Anmeldenummer: 92102809.8
(22) Anmeldetag: 20.02.1992
(51) Int. Cl.: B32B 27/34, B32B 27/36, B32B 7/10, C08J 5/12

(54) **Thermoplastische Mehrschichtverbunde**
Thermoplastic laminate
Stratifié thermoplastique

(30) Priorität: 18.04.1991 DE 4112668
(43) Veröffentlichungstag der Anmeldung: 21.10.1992
(73) Patentinhaber: HÜLS AKTIENGESELLSCHAFT, 45764 Marl (DE)
(72) Erfinder: Mügge, Joachim, Dr., W-4358 Haltern (DE); Ohm, Hubertus, Dr., W-4358 Haltern (DE); Gerth, Christian, Dr., W-4358 Haltern (DE)

(56) Entgegenhaltungen:
- EP-A- 287 839
- EP-A- 0 117 622
- EP-A- 0 118 409
- EP-A- 0 204 315
- EP-A- 0 271 097
- EP-A- 0 435 787
- US-A- 3 378 602

## Beschreibung

Gegenstand der Erfindung sind thermoplastische Mehrschichtverbunde aus einer Formmasse auf Basis von Polyamid, einer Formmasse auf Basis von Polyester sowie einem bestimmten Haftvermittler, weiterhin ein Verfahren zu deren Herstellung sowie deren Verwendung.

Polyamide bzw. Polyester sind für sich alleine für viele Anwendungen ungeeignet. So sind Polyamide bespielsweise nicht witterungsbeständig, da sie unter Belichtung altern sowie Luftfeuchtigkeit aufnehmen. Dies führt zu Verfärbung, Verschlechterung der mechanischen Eigenschaften sowie Verzugserscheinungen.

Obwohl Polyamide für sich alleine gute mechanische Eigenschaften, insbesondere gute Zähigkeit, aufweisen, haben sie eine schlechte Sperrwirkung. Insbesondere polare Substanzen können leicht durch Polyamide migrieren. Dies ist beispielsweise bei Kraftstoffleitungen, in denen alkoholhaltiger Kraftstoff gefördert wird, äußerst nachteilig.

Polyester sind im allgemeinen gut witterungsbeständig und besitzen eine ausgezeichnete Sperrwirkung sowohl gegenüber polaren als auch unpolaren Medien. Sie sind jedoch in der Regel schlagempfindlich. Insbesondere die Kerbschlagzähigkeit ist bei Polyestern häufig nicht ausreichend. Auch die Beständigkeit gegenüber manchen chemischen Einflüssen läßt zu wünschen übrig. Deshalb können Polyester in vielen Fällen, in denen andere Eigenschaften wie deren ausgezeichnete Sperrwirkung, hohe Temperaturbeständigkeit und gute Steifigkeit eigentlich erwünscht wären, nicht verwendet werden.

Es wäre daher wünschenswert, wenn es gelänge, einen festen Verbund zwischen Polyamid und Polyester herzustellen. Damit wäre es möglich, beispielsweise Formkörper aus Polyamid durch Beschichten mit Polyester vor Licht und Feuchtigkeit zu schützen. Genauso könnte ein Formkörper aus Polyester durch Beschichten mit Polyamid vor chemischen und mechanischen Einflüssen geschützt werden. Ein weiterer Vorteil wäre hier die bessere Beschriftbarkeit.

Verbunde aus Polyamid und Polyester sind im Prinzip schon bekannt. In der EP-A 0 336 806 wird die Coextrusion von PA 12 und Polybutylenterephthalat (PBT) zu einem Zweischichtrohr beschrieben. In der DE-PS 38 27 092 wird ein Mehrschichtrohr beschrieben, das von innen nach außen Schichten aus Polyamid, Polyvinylalkohol, Polyamid und Polyester besitzt. Es ist allerdings dem Fachmann bekannt, daß die weitaus meisten Polymere, auch Polyamide und Polyester, miteinander unverträglich sind, weshalb bei der Herstellung von Polymerlaminaten keine Anhaftung zwischen den Laminatschichten erreicht wird. Ein kraftschlüssiger Verbund zwischen den einzelnen Polymerschichten ist aber bei den üblichen technischen Anwendungen unbedingt erforderlich.

Aus der EP-A 0 281 839 sind Verbunde aus speziellen Polyamidmischungen und verschiedenen anderen Thermoplasten, wie beispielsweise Polyethylenterephthalat, bekannt. Dort wird, um die unverzichtbare Haftung zwischen den beiden Schichten zu erzielen, ein Haftvermittler zwischen die Laminatschichten eingebracht. Als geeignete Haftvermittler werden dort funktionalisierte Polyolefine, funktionalisierte Ethylen-Vinyl-acetat-Copolymere, Ethylen-Acrylat-Copolymere, Ionomere, Polyalkylenoxid-Polyester-Blockcopolymere, Derivate von Carboxymethylcellulose sowie Blends dieser Polymeren mit Polyolefinen angegeben.

Es hat sich nun aber herausgestellt, daß diese Haftvermittler speziell im System Polyamid/Polyester in der Regel keinen kraftschlüssigen Verbund ergeben. In den Fällen, in denen ein gewisser Kraftschluß erzielt werden kann, geht dieser beim Erwärmen oder bei Einwirkung von Lösemitteln verloren, da die Haftvermittler nicht ausreichend wärmeformbeständig und lösemittelbeständig sind. Zudem versagen derartige Verbunde bei Scherbelastung leicht durch kalten Fluß des Haftvermittlers.

Die Aufgabe der vorliegenden Erfindung war daher, einen lösemittel- und temperaturbeständigen Verbund zwischen Polyester und Polyamid zu schaffen, der unempfindlich gegenüber Scherbeanspruchung ist und gute mechanische Eigenschaften besitzt. Insbesondere sollte eine starke Kohäsion an den Phasengrenzflächen erzielt werden.

Diese Aufgabe wurde durch einen thermoplastischen Mehrschichtverbund gelöst, bestehend aus
a) mindestens einer Schicht aus einer Formmasse auf Basis von Polyamid;
b) mindestens einer Schicht aus einer Formmasse auf Basis von Polyester;
c) dazwischen einem Haftvermittler aus einer Formmasse, die eine Mischung aus Polyamid und Polyester enthalt, wobei zumindest ein Teil des Polyamidanteils und des Polyesteranteils als Polyamid-Polyester-Blockcopolymere vorliegt und darüber hinaus der Haftvermittler als Schicht aufgebracht wird, dergestalt, daß eine gute Anbindung der einzelnen Schichten vorliegt.

In einer bevorzugten Ausführungsform besitzt die Formmasse auf Basis von Polyamid eine kontinuierliche Polyamid-Phase und die Formmasse auf Basis von Polyester eine kontinuierliche Polyester-Phase.

Unter Polyamiden sind solche Polymere zu verstehen, bei denen die Monomereinheiten überwiegend, d. h. zu mindestens ca. 60 %, durch Amidbindungen der Formel 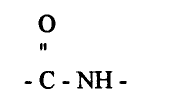 miteinander verknüpt sind. Hier kommen folgende Polymere in Frage:
1) Homo- und Copolymere, die sich von Dicarbonsäuren, Diaminen, Aminocarbonsäuren und/oder Lactamen herleiten. Sie sind vorzugsweise von ausschließlich aliphatischer Struktur. Insbesondere seien hier PA 6, PA 46, PA 66, PA 612, PA 1010, PA 1012, PA 11, PA 12, PA 1212 und deren Mischungen aufgeführt. Die Kennzeichnung der Polyamide entspricht internationaler Norm, wobei die erste(n) Ziffer(n) die C-Atomzahl des Ausgangsamins und die letzte(n) Ziffer(n) die C-Atomzahl der Dicarbonsäure angeben. Wird nur eine Zahl angegehen, so bedeutet dies, daß von einer Aminocarbonsäure bzw. deren Lactam ausgegangen wird (H. Domininghaus, "Die Kunststoffe und ihre Eigenschaften", VDI Verlag, 1976, Seite 272). Geeignet sind aber auch gemischte aliphatischaromatische Copolyamide (vgl. US-PSS 2 071 250, 2 071 251, 2 130 523, 2 130 948, 2 241 322, 2 312 966, 2 512 606, 3 393 210; Kirk-Othmer, Encyclopedia of chemical technology, Vol. 18, John Wiley & Sons (1982), Seiten 328 bis 435). Das Zahlenmittel des Molekulargewichts der Polyamide sollte über 5 000, vorzugsweise über 10 000, liegen.
2) Polyetheramide und Polyetheresteramide. Derartige Produkte werden z. B. in den DE-OSS 27 12 987, 25 23 991 und 30 06 961 beschrieben.

Unter Polyestern sind solche Polymere zu verstehen, bei denen die Monomereinheiten überwiegend, d. h. zu mindestens ca. 60 %, durch Esterbindungen miteinander verknüpft sind. Hier kommen Homo- und Copolymere in Frage, die sich von Dicarbonsäuren, Diolen, Bisphenolen, Hydroxycarbonsäuren und/oder Lactonen herleiten. Als Diolkomponente kommen hier beispielsweise Ethylenglykol, Trimethylenglykol, Tetramethylenglykol, Hexamethylenglykol, 1,4-Cyclohexandimethanol und Neopentylglykol und als Dicarbonsäurekomponente beispielsweise Isophthalsäure, Terephthalsaure, 2,6-, 2,7-, 1,5-, 1,4-Naphthalindicarbonsäure, Diphensäure und Diphenylether-4,4'-dicarbonsäure in Frage. Ein Teil dieser Diolkomponente kann in bekannter Weise durch eine Verbindung HO(̵R-O)̵ₓH mit x mindestens gleich 10 ersetzt werden, wobei R eine zweiwertige gesättigte Gruppe mit 2 bis 4 (-Atomen bedeutet. Genauso können maximal 20 Mol-% der Dicarbonsäurekomponente durch aliphatische Dicarbonsäuren mit 2 bis 12 C-Atomen, wie z. B. Bernsteinsäure, Malein- oder Fumarsäure, Adipinsäure, Sebacinsäure und Dodecandisäure ersetzt sein. Geeignete Bisphenole sind beispielsweise Bisphenol A, Bisphenol T, Hydrochinon, Tetramethylbisphenol A oder Tetramethylbisphenol S, geeignete Hydroxycarbonsäuren beispielsweise p-Hydroxybenzoesäure, während als Lacton insbesondere Caprolacton geeignet ist.

Die Darstellung dieser Polyester erfolgt üblicherweise durch Kondensation eines Diols, z. B. Ethylenglykol, 1,4-Butandiol oder 1,4-Cyclohexandimethanol mit einer aromatischen Dicarbonsäure, wie z. B. Isophthal- oder Terephthalsäure oder deren Ester. Bevorzugt werden als Polyester Polyethylenterephthalat (PET) oder Polybutylenterephthalat (PBT) oder Copolyester aus 1,4-Butandiol, Dodecandisäure und Terephthalsäure verwendet.

Verfahren zur Herstellung dieser Polyester sind in der Literatur ausführlich beschrieben (z. B. Ullmanns Enzyklopädie der technischen Chemie, Band 19, Seite 61 ff., sowie DE-OS 24 07 155 und DE-OS 24 07 156).

Die Komponente b) kann zusätzlich weitere Thermoplaste, wie z. B. Polycarbonat (PC), Styrol-Maleinsäureanhydrid-Copolymere, Acrylnitril-Butadien-Styrol-Copolymerisate (ABS), Styrol-Acrylnitril-Copolymerisate, Acrylnitril-Styrol-Acrylat-Copolymerisate oder Mischungen daraus enthalten.

Als Polycarbonate kommen insbesondere die aromatischen Typen in Frage, die dem Fachmann allgemein bekannt sind; vgl. z. B. Kirk-Othmer, Encyclopedia of chemical technology, Vol. 18, John Wiley & Sons (1982), Seiten 479 bis 494. Sie werden durch Reaktion eines Bisphenols mit einer Carbonatvorstufe, wie Phosgen, einem Chlorkohlensäureester oder Kohlensäureester erhalten. Typische Bisphenole sind Bisphenol A, Bisphenol T, Tetramethylbisphenol A oder Tetramethylbisphenol S. Das bevorzugte Polycarbonat ist das Homopolymere, das sich von Bisphenol A herleitet.

Die Komponente a) kann zusätzlich weitere Thermoplaste, wie z. B. Polyphenylenether, ggf. dem Stand der Technik entsprechend modifiziert, Polystyrol, ggf. dem Stand der Technik entsprechend modifiziert, sowie Styrol-Maleinsäureanhydrid-Copolymere, Acrylnitril-Butadien-Styrol-Copolymerisate, Styrol-Acrylnitril-Copolymerisate, Acrylnitril-Styrol-Acrylat-Copolymerisate, andere Styrol-Copolymerisate sowie Polyolefine, ggf. dem Stand der Technik entsprechend modifiziert, enthalten.

Als Polyphenylenether (PPE) kommen Polymere in Frage, die aus folgenden Einheiten aufgebaut sind:

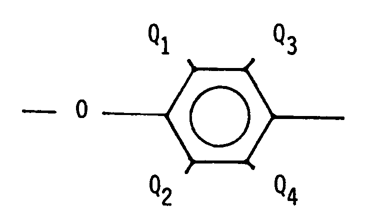

Hierbei sind Q₁ und Q₂ entweder Alkylreste mit 1 bis 10 C-Atomen, die vorzugsweise primär sind, Cycloalkylreste mit 5 bis 10 C-Atomen, Benzylreste mit 7 bis 10 C-Atomen oder Arylreste mit 6 bis 10 C-Atomen. Q₃ und Q₄ können die gleiche Bedeutung wie Q₁ und Q₂ haben; vorzugsweise bedeuten sie jedoch Wasserstoff.

Diese Polyphenylenether können nach jedem dem Stand der Technik entsprechenden Verfahren hergestellt werden. Üblicherweise werden die entsprechenden Phenole mit einem Sauerstoff enthaltenden Gas, wie z. B. Luft, in Gegenwart eines Katalysatorkomplexes oxidativ gekuppelt. Bei Einsatz eines in para-Stellung halogenierten Phenols muß eine ausreichende Menge an Säureacceptor anwesend sein. Vorzugsweise werden als Katalysatoren Kupfer-Amin-Komplexe oder manganhaltige Systeme benutzt (DE-OSS 32 24 691 und 32 24 692 sowie US-PSS 3 306 874, 3 306 875 und 4 028 341). Die Viskositätszahlen J, bestimmt nach DIN 53 728 in Chloroform bei 25 °C, liegen im Bereich von 20 bis 80 cm³/g (Konzentration 5 g/l), vorzugsweise im Bereich von 40 bis 70 cm³/g. Zur Herstellung dieser Polyphenylenether können beispielsweise folgende Monomere eingesetzt werden: 4-Brom-2,6-dimethylphenol, 2-Methyl-6-ethylphenol, 2,6-Diethylphenol, 2-Methyl-6-tert.-butylphenol, 4-Brom-2,6-diphenylphenol, 2-Benzyl-6-methylphenol, 2,6-Dibenzylphenol, 2,3,6-Trimethylphenol oder bevorzugt 2,6-Dimethylphenol. Selbstverständlich können auch Gemische derartiger Phenole verwendet werden.

Mit umfaßt werden natürlich auch modifizierte Polyphenylenether, z. B. Pfropfcopolymere mit Vinylmonomeren, Styrol oder anderen Modifizierungsreagenzien.

Die Komponente a) und/oder die Komponente b) können weiterhin einen oder mehrere schlagzähmachende Kautschuke enthalten. Geeignete Verbindungen sind z. B. Ethylen-Propylen- oder Ethylen-Propylen-Dien-Copolymere, Polypentenylen, Polyoctenylen oder statistische bzw. blockartig aufgebaute Copolymere aus alkenylaromatischen Verbindungen mit Olefinen oder Dienen.

Die schlagzähmachenden Kautschuke können gemäß dem Stand der Technik funktionalisiert sein, z. B. mit Maleinsäureanhydrid (MSA), ggf. in Anwesenheit von Styrol.

Als weitere zähmachende Kautschuke seien genannt:
Kern-Schale-Kautschuke mit einem zähelastischen Kern aus Acrylat-Kautschuk, Butadien-Kautschuk oder Styrol-Butadien-Kautschuk jeweils mit einer Glastemperatur T_{g}<-10 °C, wobei der Kern jeweils vernetzt sein kann. Die Schale kann aufgebaut sein aus Styrol und/oder Methylmethacrylat und/oder weiteren, ggf. Säure- oder Säureanhydridgruppen tragenden, ungesättigten Monomeren.

Die Komponenten a) und/oder b) können daneben einen Flammschutz sowie weitere Zusatzstoffe, wie Pigmente, Oligo- und Polymere, Antistatika, Stabilisatoren und Verarbeitungshilfsmittel sowie Verstärkungsmittel, enthalten. Der Anteil der Verstärkungsmittel kann bis zu 50 %, der der Flammschutzmittel bis zu 15 % und der aller übrigen Zusatzstoffe insgesamt bis zu 5 %, jeweils bezogen auf die gesamte Formmasse, betragen. Als Flammschutzmittel sind besonders aromatische Phosphorverbindungen, wie Triphenylphosphinoxid, Triphenylphosphit und Triphenylphosphat, geeignet. Man kann auch ein übliches halogenhaltiges Flammschutzmittel verwenden. In Frage kommen dabei Halogen enthaltende organische Verbindungen, wie sie z. B. in der Monographie von H. Vogel "Flammfestmachen von Kunststoffen", Hüthig-Verlag, 1966, auf den Seiten 94 bis 102 beschrieben werden. Es kann sich dabei aber auch um halogenierte Polymere, wie z. B. halogenierte Polyphenylenether (siehe DE-OS 33 34 068) oder bromierte Oligo- bzw. Polystyrole, handeln. Die Verbindungen sollen mehr als 30 Gewichtsprozent Halogen enthalten.

Im Falle des Einsatzes von halogenhaltigen Flammschutzmitteln empfiehlt es sich, einen Synergisten zu verwenden. Geeignet sind Verbindungen des Antimons, Bors und des Zinns. Diese werden im allgemeinen in Mengen von 0,5 bis 10 Gewichtsprozent, bezogen auf die thermoplastischen Massen, eingesetzt. Als Verstärkungsmittel eignen sich insbesondere Glas- und Kohlenstoffasern.

Geeignete Stabilisatoren umfassen organische Phosphite, wie z. B. Didecylphenylphosphit und Trilaurylphosphit, sterisch gehinderte Phenole sowie Tetramethylpiperidin-, Berzophenon- und Triazolderivate.

Als Verarbeitungshilfsmittel eignen sich Wachse, wie z. B. oxidierte Kohlenwasserstoffe sowie ihre Alkali- und Erdalkalisalze.

Als Komponente c) wird eine Formmasse verwendet, die sowohl mit der Komponente a) als auch mit der Komponente b) verträglich ist, d. h. eine starke Kohäsion ergibt und daher als Haftvermittler geeignet ist.

Um eine gute Haftwirkung zu beiden Seiten hin zu erzielen, wird die Mischung aus Polyamid und Polyester vorzugsweise im Gewichtsverhältnis 30 : 70 bis 70 : 30 eingesetzt, besonders bevorzugt im Gewichtsverhältnis 40 : 60 bis 60 : 40.

Um dem Haftvermittler [Komponente c)] eine gute Wärme- und Lösemittelbeständigkeit zu erteilen, sollte dieser mindestens 50 Gew.-%, bevorzugt mindestens 70 Gew.-% und besonders bevorzugt mindestens 85 Gew.-% einer Mischung aus Polyamid und Polyester enthalten. Hierbei werden teilkristalline Polyamide und Polyester mit einem Kristallitschmelzpunkt Tₘ von mindestens ca. 140 °C bevorzugt.

Die haftvermittelnde Wirkung der Komponente c) wird noch dadurch erhöht, daß zumindest ein Teil des Polyamidanteils und des Polyesteranteils als Polyamid-Polyester-Blockcopolymere vorliegt. Diese können gemaß dem Stand der Technik auf verschiedene Weise hergestellt werden.

Beispielsweise wird in der US-PS 3 378 602 ein Verfahren zur Herstellung von Polyamid-Polyester-Blockcopolymeren durch Umsetzung in der Schmelze ohne Katalysator beschrieben. Die EP-A 0 084 643 beschreibt ein Verfahren zur Herstellung von Blockcopolymeren, bei dem eine wirksame Menge eines Phosphits zugegeben wird. Weiterhin können zur Herstellung von Polyamid-Polyester-Blockcopolymeren in der Schmelze folgende Katalysatoren verwendet werden: Verbindungen von Zinn, Titan, Zirkonium, Mangan, Zink oder Antimon, beispielsweise Zinn(II)-oxalat, Dibutylzinnoxid, Dibutylzinndilaurat, Titantetraisopropylat, Zirkoniumtetraisopropylat, Manganacetat, Zinkoxid, Zinkacetat, Antimontrioxid oder Antimonacetat. Diese Katalysatoren werden vorzugsweise in Mengen von 0,05 bis 1,0 Gew.-% eingesetzt.

Am bequemsten lassen sich derartige Blockcopolymere entsprechend der bereits erwähnten EP-A 0 084 643 durch Schmelzemischen eines Amino-Endgruppen enthaltenden Polyamids, eines Carboxylendgruppen enthaltenden Polyesters und einer Verbindung des dreiwertigen Phosphors, insbesondere Triphenylphosphit, herstellen.

Die Fertigung der Mehrschichtverbunde kann ein- oder mehrstufig erfolgen.

Beim einstufigen Spritzgießverfahren bringt man die verschiedenen Schmelzen in einer Form zusammen und läßt das Formteil erkalten (Mehrkomponentenspritzguß).

Beim einstufigen Extrusionsverfahren werden in üblicher Weise die verschiedenen Schmelzen coextrudiert.

Bei den mehrstufigen Verfahren wird zunächst ein Formteil entweder aus der Komponente a) oder der Komponente b) hergestellt und dann mit den übrigen Komponenten beaufschlagt, was durch Pressen, Spritzgießen oder Extrudieren geschehen kann.

Diese Mehrschichtverbunde finden bei Konstruktionsteilen vor allem im Bereich der Elektro-, Maschinenbau- und Automobilindustrie dort Verwendung, wo die Steifigkeit des Polyesters mit der Zähigkeit des Polyamids kombiniert werden soll oder wo die nachteiligen Eigenschaften des Polyamids wie mangelnde UV-Beständigkeit, nicht ausreichende Kratzfestigkeit oder schlechte Sperrwirkung durch eine Beschichtung aus Polyester ausgeglichen werden sollen. Insbesondere finden sie Anwendung als Folien, vor allem als Lebensmittelverpackungsfolien oder als Mehrschichtrohre, z. B. im Bereich der Kfz-Industrie.

### Beispiele 1 bis 18

### Herstellung der Mehrschichtverbunde

Die getrockneten Einsatzkomponenten werden zunächst einzeln zu ca. 1 mm starken Preßplatten verarbeitet (Preßzeit: 10 min, Preßtemperatur: mindestens 10 °C oberhalb der Schmelz- bzw. Erweichungstemperatur). Dabei dürfen keinerlei Formtrennmittel verwendet werden. Die Einzelplatten werden danach in der gewünschten Schichtfolge zu einem Stapelverbund verpreßt. Die Preßtemperatur richtet sich dabei nach dem Material mit dem höchsten Schmelz- bzw. Erweichungspunkt. Die Preßzeit liegt wiederum bei 10 min.

### Prüfung der Mehrschichtverbunde

Mit einem Metallkeil (Schneidenwinkel 5 Grad) wird die zu prüfende Material-Grenzschicht getrennt. Erfolgt die Trennung überall exakt beim Übergang von einer Komponente zur anderen, so ist die Haftung schlecht. Erfolgt die Trennung dagegen ganz oder teilweise innerhalb einer der beiden Komponenten, so liegt eine gute Anbindung vor. Die Ergebnisse sind in den Tabellen 1 und 2 dargestellt.

### Verwendete Materialien

- A1:: Polyamid 12, VESTAMID^{R} X4887 (Fa. HÜLS)
- A2:: Polyamid 6, ULTRAMID^{R} B4 (Fa. BASF)
- A3:: Polyamid 66, ULTRAMID^{R} A4 (Fa. BASF)
- A4:: Polyamid 12, VESTAMID^{R} X1852 (Fa. HÜLS)
- A5:: Polyamid 12/PPE-Blend, VESTOBLEND^{R} 1500 (Fa. HÜLS)
- B1:: Polybutylenterephthalat, VESTODUR^{R} 3000 (Fa. HÜLS)
- B2:: Polyethylenterephthalat, POLYCLEAR^{R} TR86 (Fa. HOECHST)
- B3:: PBT/PC-Blend, hergestellt aus 70 Gew.-Teilen VESTODUR^{R} 3000 (Fa. HÜLS), 30 Gew.-Teilen MAKROLON^{R} 2800 (Fa. BAYER) und 0,1 Gew.-Teilen eines Phosphitstabilisators
- B4:: PBT/ABS-Blend, hergestellt aus 70 Gew.-Teilen VESTODUR^{R} 3000 (Fa. HÜLS) und 30 Gew.-Teilen BAYMOD^{R} (Fa. BAYER)
- C1:: MSA-modifiziertes SEBS, KRATON^{R} FG 1901X (Fa. SHELL)
- C2:: MSA-modifiziertes EPM, EXXELOR^{R} VA1803 (Fa. EXXON)
- C3:: MSA-modifiziertes PP, ADMER^{R} QR500 (Fa. Mitsui)
- C4:: 50 Gew.-Teile Polyamid 12 (ηᵣₑₗ nach ISO 307/DIN 53 727 in 0.5%iger Kresol-Lösung: 1.91, Gehalt an Amino-Endgruppen: 80 mmol/kg, Gehalt an Carboxyl-Endgruppen 20 mmol/kg) wurden mit 50 Gew.-Teilen PBT (Viskositätszahl J, gemessen nach DIN 53 728 bei 25 °C in o-Dichlorbenzol/Phenol (je 50 Gewichtsteile, Konzentration: 5 g/l) : 165 m³/g, Gehalt an Carboxylgruppen: 40 mmol/kg) und 0.1 Gew.-Tl. Triphenylphosphit in einem kontinuierlichen, gleichsinnig drehenden Zweiwellenkneter Leistritz 30.34 bei 260 °C Manteltemperatur, 3 kg/h Massedurchsatz und einer Schneckendrehzahl von 50 min⁻¹ schmelzegemischt, stranggepreßt und granuliert.
- C5:: 50 Gew.-Teile Polyamid 12 (ηᵣₑₗ nach ISO 307/DIN 53 727 in 0.5%-iger Kresol-Lösung: 1.91, Gehalt an Amino-Endgruppen: 80 mmol/kg, Gehalt an Carboxyl-Endgruppen 20 mmol/kg) wurde mit 50 Gew.-Teilen PBT (Viskositätszahl J, gemessen nach DIN 53728 bei 25 °C in o-Dichlorbenzol/Phenol (je 50 Gewichtsteile, Konzentration: 5 g/l): 155 cm³/g, Gehalt an Carboxylgruppen: 40 mmol/kg) und 0.1 Gew.-Teilen Dibutylzinnoxid in einem kontinuierlichen, gleichsinnig drehenden Zweiwellenkneter Leistritz 30.34 bei 260 °C Manteltemperatur, 3 kg/h Massedurchsatz und einer Schneckendrehzahl von 50 min⁻¹ schmelzegemischt, stranggepreßt und granuliert.
- C6:: 100 Gew.-Teile eines Polybutylenterephthalates mit überwiegend Hydroxylendgruppen werden mit 11 Gew.-Teilen eines mehrfunktionellen Isocyanates IPDI T 1890 (Fa HÜLS) in der Schmelze bei 250 °C umgesetzt und anschließend mit 100 Gew.-Teilen des in C4 verwendeten Polyamid 12 umgeschmolzen, stranggepreßt und granuliert.
- C7:: 50 Gew.-Teile Polyamid 6 (mittelviskos, mit überwiegend Aminoendgruppen) wurde mit 50 Gew.-Teilen PET (Viskositätszahl J, gemessen nach DIN 53 728 bei 25 °C in o-Dichlorbenzol/Phenol (je 50 Gewichtsteile, Konzentration: 5 g/l): 110 cm³/g) mit überwiegend Carboxylendgruppen und 0.1 Gew.-Teilen Triphenylphosphit in einem kontinuierlichen, gleichsinnig drehenden Zweiwellenkneter Leistritz 30.34 bei 280 °C Manteltemperatur, 3 kg/h Massedurchsatz und einer Schneckendrehzahl von 50 min⁻¹ schmelzegemischt, stranggepreßt und granuliert.

**Tabelle 1**

| Nicht erfindungsgamäße Vergleichsbeispiele | | | | | | |
|---|---|---|---|---|---|---|
| Beisp. | Schicht A | Schicht B | Zwischenschicht | mechanisch an Grenzfläche trennbar | | |
| | | | | bei RT | bei 160°C | nach Lagerung in LM^{a} |
| 1 | A1 | B1 | - | ja | ja | ja |
| 2 | A1 | B1 | C1 | nein | ja | ja |
| 3 | A1 | B1 | C2 | nein | ja | ja |
| 4 | A2 | B1 | - | ja | ja | ja |
| 5 | A1 | B1 | C3 | ja | ja | ja |
| 6 | A4 | B1 | C3 | ja | ja | ja |
| 7 | A4 | B2 | C3 | ja | ja | ja |
| 8 | A3 | B2 | - | ja | ja | ja |
| 9 | A4 | B3 | - | ja | ja | ja |
| 10 | A4 | B4 | - | ja | ja | ja |
| 11 | A4 | B3 | C1 | nein | ja | ja |

| | | | | | | |
|---|---|---|---|---|---|---|
| a) Lösungsmittelgemisch Toluol/Hexan (1 : 1 w/w) | | | | | | |

**Tabelle 2**

| Erfindungsgemäße Beispiele | | | | | | |
|---|---|---|---|---|---|---|
| Beisp. | Schicht A | Schicht B | Zwischenschicht | mechanisch an Grenzfläche trennbar | | |
| | | | | bei Rt | bei 160 °C | nach Lagerung in LM^{a} |
| 12 | A4 | B1 | C4 | nein | nein | nein |
| 13 | A4 | B1 | C5 | nein | nein | nein |
| 14 | A4 | B1 | C6 | nein | nein | nein |
| 15 | A2 | B2 | C7 | nein | nein | nein |
| 16 | A1 | B4 | C4 | nein | nein | nein |
| 17 | A5 | B1 | C6 | nein | nein | nein |
| 18 | A4 | B3 | C4 | nein | nein | nein |

| | | | | | | |
|---|---|---|---|---|---|---|
| a) Lösungsmittelgemisch Toluol/Hexan (1 : 1 w/w) | | | | | | |

## Patentansprüche

1. Thermoplastischer Mehrschichtverbund, bestehend aus
a) mindestens einer Schicht aus einer Formmasse auf Basis von Polyamid;
b) mindestens einer Schicht aus einer Formmasse auf Basis von Polyester;
c) dazwischen einem Haftvermittler aus einer Formmasse, die eine Mischung aus Polyamid und Polyester enthält, wobei zumindest ein Teil des Polyamidanteils und des Polyesteranteils als Polyamid-Polyester-Blockcopolymere vorliegt und darüber hinaus der Haftvermittler als Schicht aufgebracht wird, dergestalt, daß eine gute Anbindung der einzelnen Schichten vorliegt.

2. Thermoplastischer Mehrschichtverbund gemäß Anspruch 1,
dadurch gekennzeichnet,
daß in der Komponente a) als Polyamid PA 6, PA 46, PA 66, PA 612, PA 1010, PA 1012, PA 11, PA 12 und/oder PA 1212 und in der Komponente b) als Polyester Polyethylenterephthalat oder Polybutylenterephthalat verwendet werden.

3. Thermoplastischer Mehrschichtverbund gemäß den Ansprüchen 1 oder 2,
dadurch gekennzeichnet,
daß die Formmasse auf Basis von Polyamid eine kontinuierliche Polyamid-Phase und die Formmasse auf Basis von Polyester eine kontinuierliche Polyester-Phase besitzt.

4. Thermoplastischer Mehrschichtverbund gemäß den Ansprüchen 1 bis 3,
dadurch gekennzeichnet,
daß der Haftvermittler mindestens 50 Gew.-%, bevorzugt mindestens 70 Gew.-% und besonders bevorzugt mindestens 85 Gew.-%) Polyamid und Polyester enthält.

5. Thermoplastischer Mehrschichtverbund gemäß Anspruch 4,
dadurch gekennzeichnet,
daß zur Herstellung des Haftvermittlers eine Mischung aus Polyamid und Polyester im Gewichtsverhältnis 30 : 70 bis 70 : 30, vorzugsweise im Gewichtsverhältnis 40 : 60 bis 60 : 40 eingesetzt wird.

6. Verfahren zur Herstellung eines thermoplastischen Mehrschichtverbunds gemäß den Ansprüchen 1 bis 5 durch Mehrkomponentenspritzguß oder Coextrusion.

7. Verwendung eines thermoplastischen Mehrschichtverbunds gemäß den Ansprüchen 1 bis 5 als Folie, insbesondere als Lebensmittelverpackungsfolie, oder als Mehrschichtrohr.

## Claims

1. A multilayer thermoplastic composite comprising
a) at least one layer made from a polyamide-based moulding composition;
b) at least one layer made from a polyester-based moulding composition and
c) between the two an adhesion promoter made from a moulding composition containing a mixture of polyamide and polyester, at least some of the polyamide and some of the polyester being in the form of polyamide-polyester block copolymers and the adhesion promoter furthermore being applied as a layer in such a way that there is good bonding of the individual layers.

2. A multilayer thermoplastic composite according to claim 1, characterised in that component a) contains, as polyamide, PA 6, PA 46, PA 66, PA 612, PA 1010, PA 1012, PA 11, PA 12 and/or PA 1212, and component b) contains, as polyester, polyethylene terephthalate or polybutylene terephthalate.

3. A multilayer thermoplastic composite according to either of claims 1 or 2, characterised in that the polyamide-based moulding composition has a continuous polyamide phase and the polyester-based moulding composition has a continuous polyester phase.

4. A multilayer thermoplastic composite according to any of claims 1 to 3, characterised in that the adhesion promoter contains at least 50 % by weight, preferably at least 70 % by weight and particularly preferably at least 85 % by weight of polyamide and polyester.

5. A multilayer thermoplastic composite according to claim 4, characterised in that, in order to prepare the adhesion promoter, a mixture of polyamide and polyester is employed in a weight ratio of from 30:70 to 70:30, preferably in a weight ratio of from 40:60 to 60:40.

6. A process for the production of a multilayer thermoplastic composite according to any of claims 1 to 5 by multicomponent injection moulding or coextrusion.

7. The use of a multilayer thermoplastic composite according to any of claims 1 to 5 as a film, in particular as a foodstuff packaging film, or as a multilayer tube.

## Revendications

1. Composite thermoplastique à plusieurs couches, constitué de
a) au moins une couche d'une masse moulable à base de polyamide ;
b) au moins une couche d'une masse moulable à base de polyester ;
c) disposé entre elles, un intermédiaire d'adhérence constitué d'un masse à mouler qui contient un mélange de polyamide et de polyester au moins une partie de la fraction polyamide et de la fraction polyester se présentant sous forme de copolymères séquencés polyamide-polyester sur lesquels le médiateur d'adhérence est déposé en couche, de manière qu'il y ait une bonne liaison entre les diverses couches.

2. Composite thermoplastique à plusieurs couches selon la revendication 1,
caractérisé en ce qu'
on utilise dans le composant a) comme polyamide le PA 6, le PA 46, le PA 66, le PA 612, le PA 1010, le PA 1012, le PA 11, le PA 12 et/ou le PA 1212 et dans le composant b) comme polyester le téréphtalate de polyéthylène ou le téréphtalate de polybutylène.

3. Composite thermoplastique à plusieurs couches selon les revendications 1 ou 2,
caractérisé en ce que
• la masse à mouler à base de polyamide possède une phase polyamide continue, et
• la masse à mouler à base de polyester possède une phase polyester continue.

4. Composite thermoplastique à plusieurs couches selon les revendications 1 à 3,
caractérisé en ce que
le médiateur d'adhérence contient au moins 50 % en poids, de préférence au moins 70 % en poids, et de façon particulièrement préférée au moins 85 % en poids de polyamide et de polyester.

5. Composite thermoplastique à plusieurs couches selon les revendications 1 à 4,
caractérisé en ce qu'
on utilise pour la fabrication du médiateur d'adhérence un mélange de polyamide et de polyester dans un rapport pondéral de 30:70 à 70:30, de préférence dans un rapport pondéral de 40:60 à 60:40.

6. Procédé de fabrication d'un composite thermoplastique à plusieurs couches selon les revendications 1 à 5, par coulée par injection de plusieurs composants ou coextrusion.

7. Utilisation d'un composite thermoplastique à plusieurs couches selon les revendications 1 à 5, sous forme de feuille, en particulier comme feuille d'emballage d'aliments, ou sous forme de tube à plusieurs couches.
